# EUROPEAN PATENT APPLICATION

(11) **EP 1 557 454 A1**
(43) Date of publication of application: **27.07.2005**
(21) Application number: 05000889.5
(22) Date of filing: 18.01.2005
(51) Int. Cl.: C09J 133/08, C09J 133/10, C09J 1/00, C08J 5/12, C09J 11/04

(54) **Two-component cold-bonding adhesive for the adhesive bonding of bitumen sheeting**

(30) Priority: 23.01.2004 DE 102004003431
(71) Applicant: BOSTIK S.A., 92400 Courbevoie (FR)
(72) Inventor: Deike, Hans Detlef, 46196 Bad Laer (DE)
(74) Representative: Granet, Pierre

(57) **Abstract**

The present invention describes a composition and a preparation process for two-component cold-bonding adhesives for the adhesive bonding of bitumen sheeting to identical sheeting and to substrates, where component 1 comprises resins dispersed in water and component 2 comprises cementitious hardeners, characterized in that the ratio of the weight of water in component 1 to the weight of the cementitious hardeners in the second component is from 0.1 to 1.0.

Resins used in liquid component 1 comprise aqueous straight acrylate or co-acrylate dispersions with, incorporated by emulsification, the triethylene glycol ester of colophony and/or petroleum-derived aromatic C9 hydrocarbons, and also polypropylene glycol alkylphenyl ether. Hardener component 2 is composed of hydraulic cement powders. Prior to use, the two components are homogeneously mixed in a ratio of 1:1 by weight.

The claimed cold-bonding adhesive is free from solvents, highly elastic, and also resistant to water and to frost.

## Description

The present invention relates to a two-component cold-bonding adhesive for the adhesive bonding of bitumen sheeting to identical sheeting or to substrates, where component 1 comprises resins dispersed in water and component 2 comprises cementitious hardeners.

In order to protect construction components from moisture, use is widely made of bitumen sheeting. The term used for simple grades is roofing felt.

Especially for the sealing of flat roofs or roofs with shallow pitch, attempts are made to achieve long-term impermeability via covering with two or more pieces of sheeting adhesive-bonded to one another. The great durability and dimensional stability of these sealing systems is advantageous.

Various designs, colours and qualities of bitumen sheeting are available in the market. E. Braun, Bitumen, 2nd Edn., R. Müller Verlag, Cologne, 1991, distinguishes four product groups: 1) simple roof sheeting, 2) roof-sealing sheeting with bitumen and/or polymer bitumen, 3) weldable sheeting, thickness 4-5 mm and 4) seal carriers, i.e. sheeting serving as a carrier for bitumen.

The material known as roofing felt is also a type of bitumen sheeting. Roofing felt is a flexible, weather-resistant roof-covering material composed of an absorbent backing (impregnating felt, jute fabric, textile fabric or polyester nonwoven), which has been impregnated with bitumen and has been treated with mineral substances: sand or shale. Roofing felts in the more restricted sense comprise a paper of variable quality as carrier material.

Bitumen is produced as a residue from distillation of petroleum. It is a low-volatility, dark-coloured, semi-solid to resilient mixture with no precise melting point. Chemically, bitumen is mainly composed of higher hydrocarbons and can be described as a dispersion of relatively high-molecular-weight asphaltenes in oily maltenes.

Critical discussion is taking place about the content of polycyclic aromatic hydrocarbons. Analyses of bitumens widely available in the market gave values of from 30 to 100 mg/kg of polycyclic aromatic hydrocarbons, including from 1 to 5 mg/kg of benzo[a]pyrene. Benzo[a]pyrene is highly toxic and highly carcinogenic. Bitumen vapours and bitumen aerosols are therefore nowadays classed as "carcinogenic, category 2".

The prior art, e.g. as set out in the DIN Standards or the Guidelines for Flat Roofs (Ed.: ZVDH, R. Müller Verlag, Cologne, 2001) sets out a number of methods for securing bitumen sheeting, including the products known as roof sheeting, and also for repair of defects: 1) welding or fusion methods, 2) free-flow methods, 3) brush-application methods, 4) cold-bonding self-adhesive methods, 5) bitumen cold-bonding adhesive, 6) polyurethane adhesive.

In the case of the welding or fusion method, the bitumen sheeting is partially melted using gas burners at temperatures of about 200°C and bonded in the melt to the substrate or to another piece of bitumen sheeting. Since this method uses an open flame there is a relatively high risk of ignition, with the need to take appropriate precautions. Timber boarding and plastics materials are particularly at risk. In addition, the people carrying out the work are exposed to a considerable level of toxic substances.

In the free-flow method, molten bitumen is used for adhesive bonding of the bitumen sheeting over the entire surface. For this, liquid bitumen adhesive composition at about 250°C is applied by pouring from a container ahead of the layer to be applied by adhesive bonding. This must take place to an extent sufficient to give a bitumen bead running across the entire width when the sheeting is rolled into place. Bitumen composition emerging at the sides has to be smoothed. This free-flow method results in very high exposure to toxic substances, even higher than with the fusion method.

A variant of the free-flow method is the brush-application method, nowadays only seldom used. In this, the hot liquid bitumen adhesive composition is applied with a brush or broom perpendicularly to the direction of laying, ahead of the sheeting. This adhesion method, too, gives considerable emission problems.

In what is known as the cold-bonding adhesive method, use is made of polymer bitumen sheeting which has an outer layer with good cold-bonding adhesive properties. Once the separating film has been peeled away, the sheeting can be adhesive-bonded under pressure. However, a disadvantage is that hot-melt bitumen adhesive or cold-bonding bitumen adhesive has to be used for adhesive bonding of joint overlaps. This means considerably increased cost. Furthermore, self-adhesive roof sheeting can only be adhesive-bonded on substrates that are dry, dust-free and oil-free. This precondition is often difficult to meet on concrete substrates.

The materials known as bitumen cold-bonding adhesives are either aqueous bitumen emulsions or solutions of bitumen in organic solvents, mostly petroleum hydrocarbons. Aqueous bitumen cold-bonding adhesives can be used indoors and outdoors to good effect. However, a disadvantage found with the adhesive bonding of roof sheeting is the high water content of these formulations. Escape of the high water content from the adhesive layer during the drying process may not take place, or may be insufficient. The result is long drying times and, even more disadvantageous, the risk of separation due to formation of vapour bubbles.

If bitumen solutions are used for adhesive bonding, high levels of solvent emission arise, these being toxic and also requiring fire-protection measures. Use of products of this type has therefore almost ceased.

Single- or two-component polyurethane adhesives can also be used for the adhesive bonding of bitumen sheeting, and also for its repair. A fundamental disadvantage with all polyurethane adhesives is the content of isocyanates or isocyanate-containing prepolymers. This class of compound is generally classified as highly toxic and requires particular protective measures and safety measures.

DE 3637342 A1 describes, by way of example, a process for the adhesive bonding of bitumen sheeting using solvent-containing polyurethane preparations. The moisture can bring about curing of the isocyanate-containing adhesives; however, this can pose considerable difficulties due to lack of moisture in the central regions of the bitumen sheeting. In addition, a considerable level of solvent emissions is to be expected.

If use is made of aqueous dispersion adhesives, e.g. based on polyacrylate, very long drying times are needed for the drying process. In the case of large-area adhesive bonding there is the risk that some of the water cannot escape and that bubbles form under the sheeting. Another disadvantage of these formulations is that they are sensitive to water condensation and when exposed to moisture separate from the substrate or from the adhesive-bonded bitumen sheeting. The known aqueous acrylate adhesives also tend to shrink greatly on drying, and this can easily lead to separation of the adhesive bond.

It is therefore an object of the present invention to provide, for the adhesive bonding of bitumen sheeting (roof sheeting) to identical sheeting or to any desired substrates, a cold-bonding adhesive which has very good adhesion properties and high flexibility and dries rapidly and in which no solvent, not even any high-boiling solvents, are to be present, so that the adhesive can be regarded as practically free from emissions. The adhesive bond must moreover be water- and frost-resistant, because it is intended for use both indoors and outdoors. With regard, to technical resources, the bitumen adhesive also has to be capable of effective DIY use for DIY laying of bitumen sheeting or damage repair.

The features listed in Claims 1 to 16 achieve this object.

The water content in adhesive component 1 (known as resin component or liquid component) may vary from 0.1 to 1 for the purposes of the present invention in accordance with the ratio stated in Claim 1. However, preference is given to two-component cold-bonding adhesives where the ratio by weight of water in the resin component to the weight of the cementitious hardeners, where this means the hydraulic constituents in component 2, is from 0.3 to 0.6. In calculating the ratio of water to cementitious hardener components, the entire content of water is to be included in the calculation, i.e. also the water content in the aqueous resin constituents.

For the inventive two-component cold-bonding adhesive use may be made of straight acrylates, or else acrylate-styrene copolymers. Particularly suitable materials are straight acrylates and preferably copolymers of acrylates and of methacrylates or mixtures of acrylates and methacrylates. All of the acrylates mentioned are used in the form of their aqueous dispersions. The straight resin content of these aqueous acrylate dispersions varies from 30 to 70% (proportions by weight).

Alongside the straight acrylates, the chemical terms for which are polyalkyl acrylates and polyalkyl methacrylates, acrylate-styrene copolymers are also suitable for formulating the inventive cold-bonding adhesives. Alkyl groups which may be used, formally deriving from the esterifying alcohol, are the methyl, ethyl, n-propyl, isopropyl, n-butyl and isobutyl groups. However, the acrylates with the relatively long alkyl groups are preferred.

Acrylates and methacrylates, including those in the form of the acrylate-styrene copolymers, have been available in the market for some time and are therefore prior art. No further description is therefore needed here. However, further reference may be made to some important properties of the aqueous polymer dispersions used: the pH is to vary around neutral, and preference is therefore given to pH values from 6 to 9, and also to fine-particle dispersions, because these properties have a favourable effect on the performance of the claimed cold-bonding adhesives.

The triethylene glycol esters of colophony claimed according to another feature of the present invention for component 1 are pale, deodorized liquid resins with average viscosities of 40 000 ± 20 000 mPas. They are obtained from isomerized balsam resins deodorized via steam distillation and an additional vacuum stripping process and freed from volatile organic compounds (VOCs). The triethylene glycol esters of colophony improve the adhesion and flexibility of the inventive two-component cold-bonding adhesives, and also their water resistance.

For the formulation, the triethylene glycol ester of colophony is incorporated by emulsification in proportions by weight of from 3 to 15% with the aid of emulsifiers in the aqueous acrylate dispersion, with vigorous stirring. Suitable emulsifiers are compounds with interfacial activity, e.g. soap or fatty alcohol polyglycol ether sulphate in the form of their alkali metal salts.

As an alternative to the triethylene glycol ester of colophony, the claimed cold-bonding adhesive component 1 may also be formulated using from 3 to 15% (proportions by weight) of petroleum-derived aromatic C9 hydrocarbon resin. These resins comprise pale-coloured, high-viscosity liquids with viscosities from about 40 000 to 100 000 mPas (25°C). The C9 hydrocarbon resins are incorporated by emulsification into the aqueous acrylate dispersion in a manner similar to that for the colophony derivatives in the presence of an emulsifier by vigorous stirring.

The starting material for obtaining the C9 hydrocarbon resins for the claimed cold-bonding adhesives is the C9 hydrocarbon fraction produced during petrochemical cracking processes (e.g. steam cracking processes) with approximate boiling limits of from 150 to 230°C. The C9 fraction comprises indene, vinyltoluene, methylindene and similar compounds. Cationic polymerization of this fraction then gives the C9 hydrocarbon resin with underlying aromatic structure.

In one particularly preferred embodiment of the present invention, both soft resins, namely the triethylene glycol ester of colophony and C9 hydrocarbon resins, each in proportions by weight of from 5 to 8%, are incorporated by emulsification into the aqueous acrylate dispersions. This achieves high flexibility together with ideal resistance to water and chemicals.

According to another feature of the present invention, component 1 of the cold-bonding adhesive comprises from 1 to 5% and preferably from 2 to 3% (proportions by weight) of polypropylene glycol alkyl ether. Alkyl groups in this compound mean methyl, ethyl, n-propyl, isopropyl, n-butyl and isobutyl groups. Polypropylene glycol alkyl ether is stirred vigorously into the aqueous acrylate dispersion. The addition of polypropylene glycol alkyl ether improves the extensibility and elasticity of the adhesive joint, without reducing water resistance.

Component 2 of the claimed cold-bonding adhesive has the consistency of a solid, fine powder. It is composed mainly of hydraulically setting cements. According to another feature of this invention, a suitable material here is alumina cement, characterized by a high aluminium oxide content of about 70% and about 30% of calcium oxide (proportions by weight) together with relatively small proportions of SiO₂, Fe₂O₃, MgO, TiO₂, K₂O and Na₂O. When the alumina cement is used its particles should be of maximum fineness. Average particle sizes which have proven advantageous are below 100 µm. Alumina cement hardens rapidly, and this also applies to its blend with Portland cement. Shrinkage is also low.

According to another feature of this invention, component 2 of the claimed cold-bonding adhesive may comprise from 10 to 90% by weight of Portland cement or white Portland cement to EN 197.

However, particular preference is given to mixtures of alumina cement and Portland cement for component 2 of the cold-bonding adhesive with proportions by weight of from 50 to 80% for the alumina cement and from 20 to 40% for the Portland cement, according to Claim 14 of the present invention.

Auxiliaries known per se may also be added to the inventive two-component cold-bonding adhesive. Mention may be made here of film-forming auxiliaries, preservatives, antifoams, emulsifiers, thickeners, colorants, and also setting accelerators for the hydraulic cements.

Fillers which may be used in small proportions below 10% by weight are: chalk, powdered quartz, silicates, silicas, aluminosilicates, aluminas and similar substances. All of the fillers are fine-particle additives with average particle sizes smaller than 50 µm. The fillers are preferably admixed with component 2 of the cold-bonding adhesive.

Examples of suitable antifoams for the component are substances based on hydrophobic silicas, on synthetic copolymers and on non-ionogenic emulsifiers. For hardener component 2, use may be made of pulverulent copolymers composed of ethylene oxide and propylene oxide with average molar masses of about 8000 g/mol.

Reference was made above to suitable emulsifiers for emulsifying the soft resins in the aqueous acrylate dispersions.

Lithium carbonate and calcium hydroxide are suitable as setting accelerators for the cementitious hardeners.

Preservatives are available commercially. Active ingredients from the isothiazolin-3-one group have proven particularly successful. They have good compatibility with aqueous formulations such as those present in resin component 1. About 0.004% content of pure active ingredient from the active ingredient class mentioned has proven to be sufficient for long-lasting preservative action during storage.

Water-based colorants or aqueous pigment preparations may be admixed with component 1. However, solid dyes or colour pigments may also be added in dry form to powder component 2.

Suitable thickeners are compounds based on acrylate or polyurethane thickeners.

The present invention also provides a process for preparing the two-component cold-bonding adhesives for the adhesive bonding of bitumen sheeting to identical sheeting or to substrates.

The general method for preparing the inventive two-component cold-bonding adhesive differs according to the two components and is as follows:
Component 1: the aqueous polyacrylate dispersion or aqueous co-acrylate dispersion forms an initial charge in a stirred vessel at from 10 to 80°C, and additives, such as antifoams, preservatives, fillers, emulsifiers and water are added, with stirring. The soft resins, i.e. C9 hydrocarbon resins and/or the triethylene glycol ester of colophony, are then incorporated by emulsification. Polypropylene glycol alkyl ether is then admixed in portions or continuously. The viscosity can then be adjusted, if necessary, via thickener or water. The material is then drawn off.
Component 2: the pulverulent cements are weighed out and dry-mixed. Pulverulent setting accelerator is then added, as also, if required, is antifoam for the subsequent mixing of components 1 and 2. Particular care has to be taken to exclude moisture during the preparation and drawing-off of component 2.

The inventive cold-bonding adhesive is mixed homogeneously prior to use in a ratio of 1:1 by weight, and can then be used immediately. It is suitable for the adhesive bonding of bitumen sheeting, bitumen polymer sheeting, simple roof sheeting, and similar bituminous sealing materials, to one another and also to any of the usual substrates; examples which may be mentioned are concrete, masonry, plastics sheets, timber boarding, metal cladding, insulation mats, ceramic piles, cementitious levelling layers, screeds and plasterwork.

The cold-bonding adhesive may be applied to the substrate using a trowel or a draw bar. The bitumen sheeting can then be adhesive-bonded by applying pressure after a short initial hardening time or immediately.

The inventive cold-bonding adhesive provides a high level of performance. Factors worthy of particular emphasis are the short setting times, high water resistance, high elasticity, and also the very good values for resistance to shear and to peeling. The open time for the claimed cold-bonding adhesive is about 60 min after mixing of the two components.

The environmental advantages of the cold-bonding adhesive are worthy of particular emphasis: no solvents or vaporizable substances are present in the adhesive. The cold-bonding adhesive is therefore absolutely neutral with regard to odour.

The invention will be further illustrated using the examples which follow.

### Example 1:

The preparation of components 1 and 2 is described in succession.

### Component 1:

78 kg of a commercially available, plasticizer-free, aqueous copolymer dispersion composed of butyl acrylates and butyl methacrylates and having a solids content of 60% and a particle size of from 0.25 to 0.6 µm forms an initial charge in a stirred tank and is heated indirectly to 30°C. 1 kg of the sodium salt of a fatty alcohol polyglycol ether sulfate is then added as emulsifier and 7 kg of triethylene glycol ester of colophony, and also 7 kg of petroleum-derived C9 hydrocarbon resin, are incorporated in succession by emulsification into the resultant mixture using a turbine agitator. To minimize foaming, it is advantageous to add a commercially available antifoam, e.g. a mixture of hydrophobic silica, synthetic copolymers and non-ionogenic emulsifiers. Antifoams of this type are marketed by Miinzing AG with the trade name Agitan.

2.5 kg of polypropylene glycol alkylphenyl ether is then stirred into the resultant mixture at room temperature.

For colouring, 1 kg of an aqueous carbon black preparation with 30% carbon black content is then also added. Finally, resin component 1 is treated with 0.2 kg of a commercially available, aqueous preservative.

The viscosity is adjusted to 3000 mPas by adding 3.3 kg of water and then stirring until the mixture is homogeneous.

### Component 2:

70 kg of alumina cement (90% < 5 µm) are mixed in a drum mixer with 29 kg of white Portland cement (Blaine fineness 4091 cm²/g). 0.2 kg of fine-particle ethylene oxide-propylene oxide copolymer with an average molar mass of 8000 g/mol is then also added, as is 0.3 of lithium carbonate and 0.5 kg of white lime hydrate, and the mixture is mixed for a further period of about 30 min until completely homogeneous.

The two components 1 and 2 are separately drawn off into tinplate buckets and stored after sealing. Before use, the two components are mixed in a ratio of 1:1 by weight, using a motorized helical mixer, and the resultant cold-bonding adhesive is spread on a flat concrete roof, e.g. using a toothed trowel. The intention is to adhesively bond the bitumen sheeting over the entire surface with overlap. The next bitumen sheeting can then, if required, be adhesive bonded in exactly the same way to the sheeting lying thereunder. The method for repair of defective bitumen coverings is similar.

The drying time for the cold-bonding adhesive at 20°C and 50% rel. humidity is about 12 hours. The adhesive bond is resistant to water and to frost.

### Examples 2 and 3:

The cold-bonding adhesives of examples 2 and 3 are prepared by analogy with example 1. The mixing specification data required are given in Table 1.

**Table 1:**

| Mixing specification data for Examples 2 and 3 | | |
|---|---|---|
| Starting materials for component 1 | Example 2 | Example 3 |
| Polybutyl acrylate dispersion (50%) | 85 kg | - |
| Polybutyl methacrylate | - | 77.6 kg |
| Sodium salt of fatty alcohol polyglycol ether sulphate | | |
| Triethylene glycol ester of colophony | 1 kg | 1.0 kg |
| C9 hydrocarbon resin | - | 13.0 kg |
| Antifoam | 11.0 kg | 5.0 kg |
| Preservative | 0.3 kg | 0.2 kg |
| Polypropylene glycol alkylphenyl ether | 0.2 kg | 0.2 kg |
| Water | 1.5 kg | 3.0 kg |
| | 1.0 kg | - |
| Total | 100 kg | 100 kg |
| | | |
| | | |

| Starting materials for component 2 | Example 2 | Example 3 |
|---|---|---|
| Alumina cement | 70 kg | 30 kg |
| Portland cement | 29 kg | 68 kg |
| Lithium carbonate | 0.2 kg | 0.2 kg |
| Calcium hydroxide | 0.7 kg | 1.0 kg |
| Powdered chalk | - | 0.8 kg |
| Antifoam | 0.1 kg | - |
| Total | 100 kg | 100 kg |

## Claims

1. Two-component cold-bonding adhesive for the adhesive bonding of bitumen sheeting to identical sheeting and to substrates, where component 1 comprises resins dispersed in water and component 2 comprises cementitious hardeners, **characterized in that** the ratio of the weight of water in component 1 to the weight of the cementitious hardeners in the second component is from 0.1 to 1.0.

2. Two-component cold-bonding adhesive for the adhesive bonding of bitumen sheeting to identical sheeting and to substrates, where component 1 comprises resins dispersed in water and component 2 comprises cementitious hardeners, **characterized in that** the ratio of the weight of water in component 1 to the weight of the cementitious hardeners in the second component is from 0.3 to 0.6.

3. Two-component cold-bonding adhesive according to Claim 1 or 2, **characterized in that** component 1 comprises an aqueous straight acrylate dispersion, composed of polyacrylates and polymethacrylates in proportions by weight of from 20 to 60%, calculated as dry matter.

4. Two-component cold-bonding adhesive according to Claim 1 or 2, **characterized in that** component 1 comprises polyacrylates in aqueous dispersion in proportions by weight of from 20 to 60%, calculated as dry matter.

5. Two-component cold-bonding adhesive according to Claim 1 or 2, **characterized in that** component 1 comprises polymethacrylates in aqueous dispersion in proportions by weight of from 20 to 60%, calculated as dry matter.

6. Two-component cold-bonding adhesive according to Claim 1 or 2, **characterized in that** component 1 comprises acrylate-styrene copolymers in aqueous dispersion in proportions by weight of from 20 to 60%, calculated as dry matter.

7. Two-component cold-bonding adhesive according to any of Claims 1 to 6, **characterized in that** component 1 comprises the triethylene glycol ester of colophony in proportions by weight of from 3 to 15%.

8. Two-component cold-bonding adhesive according to any of Claims 1 to 6, **characterized in that** component 1 comprises petroleum-derived aromatic C9 hydrocarbon resin in proportions by weight of from 3 to 15%.

9. Two-component cold-bonding adhesive according to any of Claims 1 to 6, **characterized in that** component 1 comprises the triethylene glycol ester of colophony in proportions by weight of from 3 to 15% and petroleum-derived aromatic C9 hydrocarbon resin in proportions by weight of from 3 to 15%.

10. Two-component cold-bonding adhesive according to any of Claims 1 to 6, **characterized in that** component 1 comprises the triethylene glycol ester of colophony in proportions by weight of from 5 to 8% and petroleum-derived aromatic C9 hydrocarbon resin in proportions by weight of from 5 to 8%.

11. Two-component cold-bonding adhesive according to any of Claims 1 to 10, **characterized in that** component 1 comprises polypropylene glycol alkylphenyl ether in proportions by weight of from 1 to 5%.

12. Two-component cold-bonding adhesive according to any of Claims 1 to 11, **characterized in that** component 2 comprises alumina cement in proportions by weight of from 10 to 90%.

13. Two-component cold-bonding adhesive according to any of Claims 1 to 12, **characterized in that** component 2 comprises Portland cement in proportions by weight of from 10 to 90%.

14. Two-component cold-bonding adhesive according to any of Claims 1 to 11, **characterized in that** component 2 comprises alumina cement in proportions by weight of from 50 to 80% and Portland cement in proportions by weight of from 20 to 40%.

15. Process for preparing a two-component cold-bonding adhesive for the adhesive bonding of bitumen sheeting to identical sheeting and to substrates, where component 1 comprises resins dispersed in water and component 2 comprises cementitious hardeners, **characterized in that** the two components are prepared separately and mixed only for application.

16. Process for preparing a two-component cold-bonding adhesive for the adhesive bonding of bitumen sheeting to identical sheeting and to substrates, where component 1 comprises resins dispersed in water and component 2 comprises cementitious hardeners, **characterized in that** the two components are prepared stepwise, and for component 1 the aqueous acrylate dispersions, the triethylene glycol ester of colophony, the petroleum-derived aromatic C9 hydrocarbon resins, the polypropylene glycol alkylphenyl ether, and also water and other auxiliaries are added, and for component 2 alumina cement, Portland cement, and also other additives are mixed.
